(19) Europäisches Patentamt
European Patent Office
Office européen des brevets

(11) Publication number: **0 121 032**
**A1**

(12) # EUROPEAN PATENT APPLICATION

(21) Application number: 83870136.5

(22) Date of filing: 19.12.83

(51) Int. Cl.$^3$: C 01 C 3/02
B 01 J 27/18

(30) Priority: 27.12.82 US 453089
18.11.83 US 553270
18.11.83 US 553203
18.11.83 US 553268
18.11.83 US 553269
18.04.83 US 486140

(43) Date of publication of application:
10.10.84 Bulletin 84/41

(84) Designated Contracting States:
DE FR GB

(71) Applicant: MONSANTO COMPANY
Patent Department 800 North Lindbergh Boulevard
St. Louis, Missouri 63166(US)

(72) Inventor: Li, Tao Ping
293 Heather Crest Drive
Chesterfield Missouri 63017(US)

(72) Inventor: Ebner, Jerry Rudolph
233 Bentwood Lane
St. Charles Missouri 63301(US)

(72) Inventor: Kuechler, Thomas Charles
11941 Brookmont
Maryland Heights Missouri 63043(US)

(74) Representative: McLean, Peter et al,
Monsanto Europe S.A. Patent Department Avenue de
Tervuren 270-272 Letter Box No 1
B-1150 Brussels(BE)

(54) **Process for the ammoxidation of methanol or formaldehyde to hydrogen cyanide.**

(57) A process for the ammoxidation of methanol or formaldehyde to hydrogen cyanide or oxidation of methanol to formaldehyde using a catalyst comprising a metal selected from the group consisting of iron, cobalt, nickel, zinc, boron and uranium, and phosphorus oxides, wherein the metal to phosphorus atomic ratio is 0.8:1 to 2.0:1.

EP 0 121 032 A1

Croydon Printing Company Ltd.

# PROCESS FOR OXIDATION AND AMMOXIDATION

## BACKGROUND OF THE INVENTION

### Field of the Invention

The invention relates to the oxidation and ammoxidation of methanol or formaldehyde to hydrogen cyanide or methanol to formaldehyde.

### Description of the Prior Art

Hydrogen cyanide is a basic chemical building block for many chemical processes. Hydrogen cyanide has been mainly produced by the ammoxidation of methane (Andrussow process) and is also obtained as a by-product in the preparation of acrylonitrile by the ammoxidation of propylene. Because hydrogen cyanide is poisonous, shipment of large amounts of hydrogen cyanide has been avoided. Usually hydrogen cyanide is produced and consumed at the same location. The Andrussow process is described in U.S. Patent 2,006,981.

Frequently, hydrogen cyanide-consuming facilities were developed next to facilities that produced hydrogen cyanide, e.g., acrylonitrile units. Recent improvements in the catalysts for acrylonitrile production have resulted in increased yields of acrylonitrile at the expense of reduced yields of hydrogen cyanide. Accordingly, there has been quite a demand for better methods of making hydrogen cyanide from inexpensive, easily transportable, starting materials such as methanol or formaldehyde.

In Japanese Kokai 51 1976-10200, a metal oxide catalyst for the ammoxidation of methanol to HCN, consisting of antimony and at least one of iron, cobalt, nickel, manganese, zinc, and uranium, with an atomic ratio of antimony to additional elements varying from 1:10 to 10:1 is disclosed. This

catalyst can be used with or without a support, but a silica support is preferred.

Japanese Kokai 54 1979-126698 discloses a catalyst for ammoxidation of methanol to HCN, which catalyst is supported on 30 to 70 weight percent silica and has the following empirical formula:

$$A_aMoBi_bFe_fNa_nP_pO_q$$

where A is potassium, rubidium, or cesium, Mo is molybdenum, Bi is bismuth, Fe is iron, Na is sodium, P is phosphorus, and O is oxygen and the subscripts represent the number of atoms of each component.

U.S. Patent 3,911,089 discloses a process for preparing hydrogen cyanide from methanol or formaldehyde using a catalyst primarily containing molybdenum and bismuth oxide. In its broadest teaching, there is disclosed a catalyst whose active components correspond to the formula:

$$Mo_aBi_bFe_cX_dY_eZ_fO_g$$

wherein X is Cr, Mn, Co, Ni, Zn, Cd, Sn, W or Pb, Y is one or more of Tl and elements of Group IA or IIA in the Periodic Table, and Z is one or more of P, As, and Sb. The catalyst can be used alone or is preferably incorporated on a suitable carrier such as silica, alumina, diatomaceous earth, silicon carbide or titanium oxide.

The catalysts disclosed in the examples of this patent usually contain three to six active elements, not counting the support and oxygen. Many of the catalysts disclosed contain small amounts of iron and phosphorus, in addition to the molybdenum and bismuth which are the primary catalytic components.

The iron is present in substantial quantities, although the phosphorus was usually present in

relatively small, almost trace amounts, in Examples 3 through 40. Two examples, 41 and 42, have relatively larger amounts of phosphorus and iron present but these examples are directed toward the production of acrylonitrile by the ammoxidation of propylene, with incidental conversion of methanol and formaldehyde to HCN. Large quantities of steam are present to improve the selectivity to HCN.

It is desirable in the art to develop an active catalyst system for use in the ammoxidation of methanol to hydrogen cyanide which would not require complicated catalyst manufacturing procedures and which would also give yields as good as or better than the more complicated prior art catalysts.

It has been discovered that a very simple catalyst system is effective for the ammoxidation of methanol to hydrogen cyanide, as long as the ratio of active catalytic elements is carefully maintained.

## SUMMARY OF THE INVENTION

Accordingly, the present invention provides a process for the ammoxidation of methanol or formaldehyde feed to hydrogen cyanide comprising passing said feed along with ammonia and oxygen or oxygen-containing gas into an ammoxidation reaction zone operated at ammoxidation conditions and containing catalytically effective amounts of at least one metal and phosphorus and wherein the atomic ratio of metal to phosphorus is within the range of 0.8:1 to 2.0:1.

In a more limited embodiment, the present invention provides a process for the ammoxidation of methanol to hydrogen cyanide comprising feeding to an ammoxidation reactor operated at ammoxidation reaction conditions, a feed comprising methanol, ammonia and oxygen and wherein the ammoxidation reaction zone

contains a fluidized bed of ammoxidation catalyst comprising $M_aPO_x$ wherein M is at least one metal selected from the group consisting essentially of manganese, iron, cobalt, nickel, zinc, boron, and uranium, a is 0.8 to 2.0, and x is the total number of the oxygen atoms in the oxides of the other atoms, and hydrogen cyanide is produced in the ammoxidation reaction zone as a product of the process.

In another embodiment, the present invention provides a process for the production of carbonyl compounds comprising passing a feed comprising an alcohol and oxygen into an oxidation zone operated at oxidation conditions and containing catalytically effective amounts of at least one metal selected from the group consisting essentially of manganese, iron, cobalt, nickel, zinc, boron, and uranium and phosphorus and wherein the atomic ratio of said metal to phosphorus is generally within the range of 0.8:1 to 2.0:1. For manganese catalyst, the ratio is preferably 1:1 to 1.5:1; for boron and uranium, the ratio is preferably 0.8:1 to 1.25:1.

## DETAILED DESCRIPTION OF THE INVENTION

The catalyst used in accordance with the present process can be prepared by conventional means. Soluble compounds of at least one metal selected from the group consisting essentially of iron, cobalt and nickel, and phosphorus can be dissolved in water, or a slurry of the catalytic elements can be formed. The solution or slurry can be mixed with the carrier, or allowed to dry as a cake, or spray-dried, or any other conventional catalyst finishing steps can be used. After drying, the catalyst is preferably subjected to conventional calcination such as by heating at 200 to 1000°C.,

preferably in an oxidizing atmosphere, to fix the catalyst composition.

Although the catalyst can be used neat, it is preferred to operate with a support. Preferred are inert supports such as $SiO_2$, $TiO_2$, $Al_2O_3$, and other supports commonly used. Especially preferred is use of $SiO_2$ and $Al_2O_3$. The support may be mixed with the active catalytic components in one or more steps. No change in activity is noticed with, e.g., multi-step silica addition. The support may constitute 10-90 wt % of the catalyst, preferably 35-65 wt % thereof.

The metal compounds that can be used include any which can be incorporated into a catalyst. Preferred compounds include acetates, nitrates, oxides, halides and similar compounds of manganese, iron, cobalt, nickel, zinc, and uranium. When boron is the selected metal, the compounds will include boric acid, boron oxides, boron halides, and similar compounds.

The phosphorus compounds that can be used include any that are known in the art, including $P_2O_5$, $H_3PO_4$, $NH_4H_2PO_4$, $(NH_4)_2HPO_4$, and similar compounds.

The ammoxidation reaction conditions used are those disclosed in the art for the ammoxidation of methanol and formaldehyde, typically, temperatures of 200 to 600°C., with better results obtained at 250 to 550°C., and best results being obtained at 300 to 500°C.

The oxidation reaction conditions used are about the same as ammoxidation conditions; the primary difference being absence of ammonia from the feed.

The molar ratio of reactants in the ammoxidation reaction zone is conventional. Usually, the molar ratio of ammonia and oxygen to methanol or formaldehyde is near stoichiometric so that most of the reactants will be consumed in the reaction. Usually, the ammonia to methanol, or formaldehyde, ratio is 0.7:1 to 2.0:1, preferably 0.9:1 to 1.3:1. Use of less ammonia increases the yield of formaldehyde from methanol, and formaldehyde is a valuable product. Use of excess ammonia is not desirable because the unreacted ammonia must be recovered and recycled, or wasted.

Air is the preferred oxygen source because it is cheap; however, pure oxygen or oxygen-enriched air may also be used. Flammable mixtures should be avoided.

Some steam may be added to the reaction zone to cut down on the possibility of forming an explosive mixture. Steam may increase slightly the selectivity of the reaction for HCN. When steam is added, it will usually be present in an amount equal to 1 to 20 mole percent of the reactants; however, it is preferred to operate without steam. Steam adds to the cost of the process by increasing the mass of material flowing though the reactors; and the steam must be heated and cooled, and ultimately separated from the HCN product. The catalysts of the present invention give such good results that there is no need to add steam.

Inert diluents may be present, and their use is common in laboratories, but not common commercially, except for nitrogen which is usually carried along with the air supplying to the reaction zone.

When the metal is manganese, it is preferred to operate with a 1.25:1 manganese:-phosphorus ratio. When the metal is iron, it is preferred to operate with a 1:1 iron:phosphorus ratio. Operation with these ratios also gives good physical properties for the catalyst. When a support is used, M:P atomic ratios of about 0.8:1 to 2.0:1 work. Better results are obtained with 0.95:1 to 1.6:1 ratio.

Although it is preferred to operate with fluid bed operation, the process should work very well in a fixed bed, ebulating bed, or moving bed type of operation. A fluidized bed is preferred because problems of hot spots and distribution within the bed are minimized. Fluid bed operation also permits easy addition and withdrawal of catalyst if this is necessary to permit replacement or regeneration of catalyst.

Using the catalyst of the present invention, it should be possible to use formaldehyde as a feed stock. The ammoxidation product will be the same as when a methanol feed is used, i.e., HCN.

Other reactions which can be promoted using the catalysts include oxidation of alcohols to aldehydes and the ammoxidation of alcohols to nitriles.

Unless otherwise indicated, the catalysts of the examples described below were evaluated to determine the HCN yield and the methanol conversion in a fluidized bed reaction vessel having an inside diameter of about 14 mm. Approximately 25 grams of catalyst was used. A reaction mixture of approximately 18 volume % $O_2$, 7 vol. % ammonia, and 7 vol. % methanol, and the balance helium, was passed upward through the catalyst bed to give the value of W/F

reported. The reactor pressure was 1.68 atm absolute.

As used herein, "W/F" is defined as the weight of catalyst in grams divided by the flow rate of the reaction stream in ml/sec measured at STP.

"% $CH_3OH$ Conversion" is defined as follows:

$$\frac{(\text{mols } CH_3OH \text{ in feed}) - (\text{mols } CH_3OH \text{ in effluent})}{\text{mols } CH_3OH \text{ in feed}} \times 100\%$$

"% HCN Yield" is defined as follows:

$$\frac{\text{mols HCN formed}}{\text{mols } CH_3OH \text{ in feed}} \times 100\%$$

"% HCN Selectivity" is defined as follows:

$$\frac{\text{moles HCN formed}}{\text{mols } CH_3OH \text{ in feed} - \text{moles } CH_3OH \text{ in effluent}} \times 100$$

## EXAMPLE 1

### Preferred Synthesis of $Mn_aPO_x$ Catalyst

A catalyst having the following composition:

$$Mn_{1.25}P_1O_x - 50 \text{ wt\% } SiO_2$$

was prepared in the following manner. 1424 grams of a 85 wt % phosphoric acid ($H_3PO_4$) solution and 741 grams of 40 wt % Nalco #2327 silica sol were added with vigorous stirring to 5527 grams of a 50 wt % manganese nitrate solution [$Mn(NO_3)_2$]. The mixture was heated at near 100°C. until the volume was reduced to around 3000 ml. during this period, the evolution of $NO_x$ gases occurred. The reaction mixture was cooled to near room temperature and 4201 grams of additional silica sol was added. The reaction mixture was ball milled for 16 hours to achieve homogeneity. The slurry was then spray-dried at a temperature of 120 - 150°C. The dried particles were then calcined at 935°C. for 2 hours in air. The resultant catalyst gave the best compromise between

catalyst performance, stability, and physical properties.

EXAMPLE 2

To a beaker containing 1200 grams of Nalco #2327 40% silica sol was added 467 grams of 85 wt % $H_3PO_4$ and 716 grams of a 50 wt % solution of $Mn(NO_3)_2$ with stirring. The pH of the slurry was adjusted to a value of 3.7 with 57 wt % $NH_4OH$ solution. The slurry was subjected to evaporation, cooked to reduce the volume and give a viscous slurry. This slurry was spray-dried, and the resultant catalyst was calcined in air 2 hours at 780 C. The catalyst had the following composition:

$$Mn_{.5}P_1O_x - 53 \text{ wt } \% \ SiO_2$$

EXAMPLE 3

To a beaker containing 715 grams of a 50 wt % $Mn(NO_3)_2$ solution was added 251 grams of a 85 wt % $H_3PO_4$ solution with stirring. The pH of the solution was raised to 8 with ammonium hydroxide causing precipitation. The reaction mixture was cooked for 1 hour, cooled, filtered, and washed. The filer cake was added to a stirred vessel containing 720 grams of Nalco #2327 40 wt % silica sol pH adjusted to 2 with 70% $HNO_3$. The catalyst slurry pH was maintained at 3.5, cooked to reduce the volume, and dried in a flat dish. The pan-dried material was ground, sieved to 106 to 38 microns, and calcined for 2 hours at 780°C. in air. The catalyst composition was $Mn_{.92}P_1O_x$ 50 wt % $SiO_2$.

EXAMPLE 4

Example 3 was repeated using instead 231 grams of 85 wt % $H_3PO_4$ and spray drying the slurry. The catalyst composition was $Mn_1P_1O_x$-50 wt % $SiO_2$.

EXAMPLE 5

To a stirred vessel containing 716 grams of a 50 wt % solution of $Mn(NO_3)_2$ was added 250 grams of $NH_4H_2PO_4$ and 710 grams of Nalco #2327 40 wt % silica sol. The reaction mixture was heated between 80 - 90°C. to reduce volume, spray-dried, and then calcined 2 hours at 950°C. in air. The catalyst composition was $Mn_1P_1O_x$-50 wt % $SiO_2$.

EXAMPLES 6 - 9

Example 5 was repeated using the following amounts of components:

| Example | $NH_4H_2PO_4$ | Nalco | Composition 50 wt % $SiO_2$ |
|---|---|---|---|
| 6 | 200 grams | 664 g | $Mn_{1.15}P_1O_x$ |
| 7 | 184 grams | 640 g | $Mn_{1.25}P_1O_x$ |
| 8 | 176 grams | 625 g | $Mn_{1.31}P_1O_x$ |
| 9 | 154 grams | 600 g | $Mn_{1.5}P_1O_x$ |

EXAMPLE 10

Alternate Preparation Method

To a stirred vessel containing 490.2 grams of manganese acetate $[Mn(C_2H_3O_2)_2 \cdot 4H_2O]$ dissolved in a liter of water was added 176.4 grams of a 85 wt % $H_3PO_4$ solution. A pink precipitate was formed. The reaction mixture was heated at 80°C. for 1 hour, and then cooled. To the reaction mixture was added 625 grams of Nalco #2327 40 wt % silica sol adjusted to pH 3.7 with glacial acetic acid. The catalyst slurry was heated to reduce volume, spray-dried, and calcined in air 2 hours at 950°C. The catalyst composition was $Mn_{1.3}PO_x$-50 wt % $SiO_2$.

TABLE 1

| CATALYST FROM EXAMPLE | 1 | 2 | 3 | 4 | 5 | 6 | 7 | 8 | 9 | 10 |
|---|---|---|---|---|---|---|---|---|---|---|
| Rx Temp. °C. | 460 | 450 | 450 | 460 | 450 | 430 | 440 | 440 | 375 | 440 |
| Pres, atm. | 1.7 | 1.7 | 1.7 | 1.7 | 1.7 | 1.7 | 1.7 | 1.7 | 1.7 | 1.7 |
| Feed, vol % | | | | | | | | | | |
| $CH_3OH$ | 6.8 | 7.0 | 7.1 | 7.1 | 7.0 | 7.2 | 7.0 | 7.4 | 6.6 | 6.6 |
| $NH_3$ | 6.7 | 7.0 | 7.2 | 6.8 | 6.9 | 7.2 | 7.2 | 7.8 | 7.7 | 6.6 |
| $O_2$ | 18.6 | 18.0 | 18.8 | 18.9 | 19.0 | 19.3 | 19.1 | 18.7 | 19.6 | 18.0 |
| W/F, g-sec/ml | 4.0 | 3.3 | 3.3 | 4.0 | 3.3 | 3.3 | 3.3 | 3.3 | 3.0 | 3.3 |
| $CH_3OH$ Conv. mol % | 99.5 | 99.0 | 81.0 | 97.0 | 99.5 | 99.3 | 99.1 | 98.7 | 100.0 | 99.0 |
| HCN | | | | | | | | | | |
| Selectivity, mol % | 87.8 | 35.4 | 60.0 | 89.0 | 90.4 | 89.7 | 90.8 | 89.0 | 5.0 | 91.0 |
| Yield, mol % | 87.4 | 35* | 49.0* | 86.4 | 90.0 | 89.1 | 90.0 | 88.0 | 5.0 | 90.0 |
| Mn/P Atomic Ratio | 1.25 | 0.5 | 0.92 | 1 | 1 | 1.15 | 1.25 | 1.31 | 1.5 | 1.3 |

*Performance declined with time.

Note: Temperatures were scanned to obtain maximum HCN yields. Optimum temperatures for HCN yields were used.

EXAMPLE 11

In this Example the ability of the catalyst for oxidation, specifically for the oxidation of methanol to formaldehyde was tested.

The catalyst produced in the same way as the catalyst of Example 1, i.e., the Mn/P atomic ratio was 1.25:1. This catalyst was tested in an experimental apparatus similar to that used in Example 11. Reaction conditions included a temperature of 400°C., a pressure of 1.7 atm absolute, and at a W/F ratio of 3.0. The feed consisted of 7 vol. % methanol, 18 vol. % oxygen, and the balance was helium. The methanol conversion was 100% with a formaldehyde yield of 77 mole %.

EXAMPLE 12

Preferred Synthesis of $Fe_aPO_x$ Catalyst

A catalyst having the following composition:

$$Fe_1P_1O_x - 50 \text{ wt\% } SiO_2$$

was prepared in the following manner. 669 grams of $Fe(NO_3)_3 \cdot 9H_2O$ was dissolved in 300 ml of water. To this solution was added 194.0 grams of 85 wt% phosphoric acid ($H_3PO_4$) solution and 625 grams of 40 wt % Nalco #2327 silica sol, with vigorous stirring to produce a mixture with volume of about 1400 ml and a pH of 0.7. The mixture was heated at near 100°C. until the volume was reduced to about 1000 ml. The reaction mixture was then stray-dried at a temperature of about 125°C. The spray-dried particles were then calcined at about 200°C for 2 hours, 900°C. for 2 hours in air. The resultant catalyst gave the best compromise between catalyst performance, stability, and physical properties. The following five examples illustrate the effect of catalyst support and stoichiometry of the iron phosphate catalyst on catalyst performance.

EXAMPLE 13

229.5 g of $Fe(NO_3)_3$ $9H_2O$ was mixed with 40 ml of water. The mixture was heated and stirred to form a dark solution. 68.0 g of $H_3PO_4$ (86.5%) was added and stirring continued until it became light colored clear solution which had a volume of 235 ml.

200 g of Norton Alumina 06948 (particle size 38-125 microns) was impregnated with 130 ml of the above solution. The material was placed in a flask and was subjected to high vacuum for few mintues and released. The procedure was repeated for several times. The material was transferred to a beaker and dried in a vacuum oven at 105°C. overnight. The dried catalyst contained 19.1% by weight of $FePO_4$ having an Fe to P ratio of 1:1.046. The catalyst was calcined at 550°C. for 2 hours.

EXAMPLE 14

66.9 g of $Fe(NO_3)_3 \cdot 9H_2O$ was dissolved in 20.5 ml of water. 19.6 g of $H_3PO_4$ (85%) was added to form a clear solution. The solution was impregnated on 25 g of silica gel (Davison Grade 952, particle size <125 microns) which had been pre-dried at 500°C. The material was placed in an oven and dried at 110°C. for 16 hours. It was calcined at 200°C. for 2 hours, 800°C. for 2 hours, and 900°C. for 4 hours. The catalyst contained 18.5% by weight of iron and 10.4% of phosphorus with an Fe to P ratio of 1:1.

EXAMPLE 15

669 g of $Fe(NO_3)_3 \cdot 9H_2O$ was dissolved in 300 ml of water. 194 g of $H_3PO_4$ (85%) was added to form a clear brown solution with a volume of about 950 ml and a pH of 0.7. The mixture was heated to yield a

very viscous slurry with the formation of $FePO_4$ suspended in the liquid. The volume was reduced to about 400 ml and evolution of nitrogen oxides was observed during the heating period. The slurry was cooled to room temperature and mixed with 625 g of silica sol (Nalco 2327). The mixture was ball-milled for 16 hours and spray-dried at 125°C. The spray-dried catalyst was calcined at 900°C. for 2 hours. It contained 18.5% by weight of iron and 10.4% of phosphorus with an Fe to P ratio of 1:1.

EXAMPLE 16

602 g of $Fe(NO_3)_3 \cdot 9H_2O$ was dissolved in 300 ml of water. To this solution was added 214 g of $H_3PO_4$ (85%) and 625 g of silica sol (Nalco 2327, 40% silica). The brown solution had a volume of about 1300 ml with a pH of 0.6. It was concentrated to about 1000 ml and spray-dried at 125°C. The catalyst was calcined first at 200°C. for 2 hours and then at 900°C for 2 hours. It contained 16.6% by weight of iron and 11.5% of phosphorus with an Fe to P ratio of 1:1.245.

EXAMPLE 17

252.6 g of $FePO_4 \cdot 2H_2O$ was mixed with 500 g of silica sol (Nalco 2327, 40% silica) and 25 ml of water. The pH of the silica dropped from 9.5 to 8.0. It was adjusted back to 10 with about 9 ml of $NH_4OH$ (conc). The slurry was ball-milled 18 hours and spray-dried at about 125°C. It was calcined at 900°C. for 2 hours. The dried catalyst contained 50% $FePO_4$ having an Fe to P ratio of 1:1. XRD (X-ray diffraction analysis) of the catalyst showed the lines of anhydrous $FePO_4$.

EXAMPLE 18

In this example, 43.6 g of $Ni(NO_3)_2 \cdot 6H_2O$

was dissolved in 15 ml of water in a vacuum flask. To this solution was added 12.0 g of $H_3PO_4$(85%) and 100 g of alumina support. The resulting mixture was slurried so that the ingredients were thoroughly mixed. The flask containing the mixture was evacuated to assure that the solution thoroughly permeated into the pores of the alumina support. The resulting catalyst was dried in a vacuum oven at 120°C. and was calcined at 550°C. for 2 hours.

The alumina used was obtained from Norton Company and was characterized as spherical, alpha-alumina, presized to a particle size range suitable for fluidization (38-125 microns). The thus-prepared catalyst had a composition of $Ni_3(PO_4)_2$/85% alumina.

EXAMPLE 19

In this example, a $Ni_{1.25}P_1O_x$/50%$SiO_2$ catalyst was prepared in the following manner. 363 g of $Ni(NO_3)_2 \cdot 6H_2O$ was dissolved in a minimum amount of water (about 100 ml). To this solution was added 114 g of $H_3PO_4$ (85%). The resulting solution was boiled until emission of $NO_2$ gas had essentially ceased. The solution was then cooled and 410 g of silica sol (Nalco 2327, 40% silica) was added to form a slurry. The slurry was ball-milled and then spray-dried and sieved to form particles of the proper size for fluidization. The catalyst was calcined at 550°C. for 2 hours.

EXAMPLE 20

A catalyst was prepared using the procedure outlined in Example 19 except that calcining in this instance was carried out at 900°C. for 2 hours.

EXAMPLE 21

In this example, $Co_1P_1O_x$/50% $SiO_2$ catalyst was prepared in the following manner. 175 g of

$Co(NO_3)_2 \cdot 6H_2O$ was dissolved in 45 ml of water. To this solution was added 69 g of $H_3PO_4$ (85%). The resulting solution was boiled until emission of $NO_2$ gas had essentially ceased. The solution was cooled and 230 g of silica sol (Nalco 2327, 40% silica) was added to form a slurry. The slurry was heated to dryness. The dried material was then further dried in a vacuum oven at 110°C. The catalyst was calcined at 750°C. for 2 hours, crushed and sieved to a fluidizable particle size.

EXAMPLE 22

A catalyst was prepared using the procedure outlined in Example 21 except that calcining in this instance was carried out at 900°C. for 2 hours.

TABLE 2

| CATALYST FROM EXAMPLE | 12 | 13 | 14 | 15 | 16 | 17 | 18 | 19 | 20 | 21 | 22 |
|---|---|---|---|---|---|---|---|---|---|---|---|
| Rx Temp. °C. | 438 | 490 | 440 | 463 | 450 | 422 | 480 | 466 | 468 | 471 | 471 |
| Pres, atm. | 1.7 | 2.6 | 1.7 | 1.7 | 1.7 | 1.7 | 1.7 | 1.7 | 1.7 | 1.7 | 1.7 |
| Feed, vol % | | | | | | | | | | | |
| $CH_3OH$ | 7.0 | 6.0 | 7.0 | 7.0 | 8.2 | 7.0 | 6.5 | 6.5 | 6.5 | 6.5 | 6.5 |
| $NH_3$ | 7.1 | 6.4 | 7.1 | 7.1 | 6.8 | 7.1 | 6.6 | 7.5 | 6.6 | 6.6 | 6.6 |
| $O_2$ | 18.0 | 18.0 | 18.0 | 18.0 | 18.5 | 18.0 | 18.0 | 16.7 | 16.7 | 16.7 | 16.7 |
| W/F, g-sec/ml | 1.5 | 6 | 3.3 | 2.5 | 3.3 | 2.5 | 5 | 2.5 | 2.5 | 2.5 | 2.5 |
| $CH_3OH$ Conv. mol % | 98.5 | 90.9 | 100.0 | 96.0 | 98.9 | 100.0 | 95.3 | 97.3 | 87.3 | 97.9 | 96.7 |
| HCN Yield | | | | | | | | | | | |
| mol % | 86.6 | 85.6 | 79.9 | 83.2 | 75.3 | 77.9 | 69.2 | 54.0 | 46.3 | 58.5 | 62.3 |
| M/P | | | | | | | | | | | |
| Atomic Ratio | 1:1 | 1:1.05 | 1:1 | 1:1 | 1:1.245 | 1:1 | 1.5:1 | 1.25:1 | 1.25:1 | 1:1 | 1:1 |

Note: Temperatures were scanned to obtain maxiumum HCN yields. Optimum temperatures for HCN yields were used.

EXAMPLE 23

Preferred Synthesis of $Zn_aPO_x$

A catalyst having the following composition: $Zn_{1.5}P_1O_x$ - 78 wt% alumina was prepared in the following manner. 66.9 g of $Zn(NO_3)_2 \cdot 6H_2O$ was dissolved in 15 ml of water in a vacuum flask. To this solution 18.0 g of $H_3PO_4$ (85%) and 100 g of alumina support were added. The resulting mixture was slurried so that the ingredients were thoroughly mixed. The flask containing the mixture was evacuated to assure that the solution thoroughly permeated into the pores of the alumina support. The resulting catalyst was dried in a vacuum oven at 120°C. and was calcined at 550°C for 2 hours.

The alumina used was obtained from Norton Company and was characterized as spherical, alpha-alumina, presized to a particle size range suitable for fluidization (38-125 microns). The thus prepared catalyst had a composition of $Zn_3(PO_4)_2$/78% alumina.

EXAMPLE 24

In this example, a $Zn_{1.25}P_1O_x$/50% $SiO_2$ catalyst was prepared in the following manner: 565 g of $Zn(NO_3)_2 \cdot 6H_2O$ was dissolved in 160 ml of water. To this solution was added 174 g of $H_3PO_4$(85%). The resulting solution was boiled until emission of $NO_2$ gas had essentially ceased. The solution was then cooled and 655 g of silica sol (Nalco 2327, 40% silica) was added to form a slurry. The slurry was ballmilled and then spray dried and sieved to form particles of the proper size for fluidization. The catalyst was calcined at 900°C. for 2 hours.

EXAMPLE 25

In this example, a $U_1P_1O_x$ / 50% $SiO_2$ catalyst was prepared. 251 g of $UO_2(NO_3)_2 \cdot 6H_2O$ and

57 g of 85% $H_3PO_4$ were dissolved in 200 ml of water. The solution was boiled one hour. After cooling the mixture, 445 g of 40% silica sol were added thereto. The mixture was then heated to dryness. The resulting residue was dried in a vacuum oven, crushed and sieved. The catalyst was calcined at 850°C. for 2 hours.

EXAMPLE 26

In this Example, a $BiP_1O_x$ / 50% $SiO_2$ catalyst was prepared. 50 grams of boron phosphate sold commercially was ballmilled with 125 grams of 40% silica sol. The slurry was heated to dryness and then more completely dried in a vacuum oven. The resulting dried material was ground, sieved out, and then calcined at 550°C. for 2 hours.

TABLE 3

| CATALYST FROM EXAMPLE | 23 | 24 | 25 | 26 |
|---|---|---|---|---|
| Rx Temp. °C. | 494 | 479 | 455 | 467 |
| Press., atm | 1.7 | 1.7 | 1.7 | 1.7 |
| Feed, Vol. % | | | | |
| $CH_3OH$ | 6.5 | 6.5 | 6.5 | 6.5 |
| $NH_3$ | 6.6 | 6.6 | 6.6 | 6.6 |
| $O_2$ | 18.0 | 18.0 | 16.8 | 16.8 |
| W/F, g - sec/ml | 5 | 4.5 | 2.5 | 5 |
| $CH_3OH$ Conv. | | | | |
| Mol % | 17.7 | 96.2 | 97.7 | 86.6 |
| HCN Yield | | | | |
| Mol % | 64.4 | 57.9 | 62.5 | 63.4 |
| M/P Atomic Ratio | 1.5-1 | 1.25-1 | 1-1 | 1-1 |

EXAMPLE 27

This example illustrates that not all metal phosphorus oxides are effective catalysts in the production of HCN from methanol.

The following catalyst was prepared in the manner generally illustrated in Example 18.

$$Cu_3P_2O_x - 84\% \ Al_2O_3$$

When this catalyst was used to make HCN from oxygen, ammonia, and methanol using a reaction temperature of 435°C., a W/F ratio of 3.3, a reactor pressure of 1.7 atm, a feed volume of 6.5% methanol, 6.6% ammonia, and 16.8% oxygen, the balance of the feed being helium, virtually no HCN was obtained.

EXAMPLE 28

The following catalyst was prepared in the manner illustrated in Example 21.

$$V_{1.25}PO_x - 50\% \ SiO_2$$

When this catalyst was used to make HCN from oxygen, ammonia, and methanol using a reaction temperature of 457°C., a W/F ratio of 1.5, a reactor pressure of 1.7 atm, a feed volume of 6.5% methanol, 6.6% ammonia and 16.8% oxygen with the balance being helium, a HCN yield of only 8.8% was obtained.

It is apparent from the data in the Table that the best yields of HCN are obtained when using catalyst having a roughly one-to-one ratio of Fe to P. This corresponds to the stoichiometric ratio of Fe and P in ferric phosphate, $FePO_4$. The catalyst tested in Example 17 was made from commercial $FePO_4 \cdot 2H_2O$. This catalyst produced relatively high yields of HCN. This tends to confirm that $FePO_4$ is the active catalytic component.

Not all metal phosphorus oxides are effective. It has been shown that neither copper nor vanadium phosphorus oxide catalysts are effective.

WHAT IS CLAIMED IS:

1. A process for the ammoxidation of methanol or formaldehyde feed to hydrogen cyanide comprising passing said feed along with ammonia and oxygen or oxygen-containing gas into an ammoxidation reaction zone operated at ammoxidation conditions and containing catalytically effective amounts of a catalyst comprising $M_aPO_x$ wherein M is at least one metal selected from the group of manganese, iron, cobalt, nickel, zinc, boron, and uranium and wherein the atomic ratio of metal to phosphorus is within the range of 0.8:1 to 2.0:1 and x is the total number of oxygen atoms in the oxides of the other atoms.

2. A process for the ammoxidation of methanol to hydrogen cyanide comprising feeding to an ammoxidation reactor operated at ammoxidation reaction conditions a feed comprising methanol, ammonia, and oxygen and wherein said ammoxidation reactor contains a fluidized bed of ammoxidation catalyst comprising $M_aPO_x$ wherein M is at least one metal consisting essentially of manganese, iron, cobalt, nickel, zinc, boron, and uranium, a is 0.8 to 2.0 and x is the total number of the oxygen atoms in the oxides of the other atoms, and hydrogen cyanide is produced in the ammoxidation reactor as a product of the process.

3. Process of Claims 2 wherein the ammoxidation catalyst comprises manganese and phosphorus oxides.

4. Process of Claim 2 wherein the ammoxidation catalyst comprises iron and phosphorus oxides.

5. Process of Claim 2 wherein the ammoxidation catalyst comprises cobalt and phosphorus oxides.

6. Process of Claim 2 wherein the ammoxidation catalyst comprises nickel and phosphorus oxides.

7. Process of Claim 2 wherein the ammoxidation catalyst comprises zinc and phosphorus oxides.

8. Process of Claim 2 wherein the ammoxidation catalyst comprises boron and phosphorus oxides.

9. Process of Claim 2 wherein the ammoxidation catalyst comprises uranium and phosphorus oxides.

10. Process of Claim 2 wherein the $MaPO_x$ catalyst is on a support, and said support is 10 to 90 wt % of the catalyst.

11. Process of Claim 10 wherein the said support is silica.

12. Process of Claim 10 wherein the said support is alumina.

0121032

European Patent Office

# EUROPEAN SEARCH REPORT

Application number

EP 83 87 0136

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
| --- | --- | --- | --- |
| D,A | US-A-2 006 981 (L. ANDRUSSOW)<br>* Page 1, right-hand column, lines 14-42 *<br>--- | 1,4,7 9-12 | C 01 C 3/02<br>B 01 J 27/18 |
| D,A | US-A-3 911 089 (T. SHIRAISHI et al.)<br>* Column 1, line 57 - column 2, line 56; tables 1, 3, 5, 6 *<br>--- | 2,3,5 6 | |
| A | Chemical Abstracts vol. 85, no. 4, 26 July 1976, Columbus, Ohio, USA page 102, column 2, abstract no. 23172b & JP-A-51-10200 (Cat. D, A)<br>--- | 8 | |
| D,A | Patent Abstracts of Japan page 140C66 & JP-A-54-126698<br>--- | 1,4,10 ,11 | TECHNICAL FIELDS SEARCHED (Int. Cl. 3) |
| A | Patent Abstracts of Japan vol. 5, no. 85, 3 June 1981 & JP-A-56-30957<br>--- | 1,6 | C 01 C 3/00<br>B 01 J 27/00 |
| A | DE-A-1 518 833 (BAYER)<br>--- | | |
| A | US-A-4 364 856 (H.H.I. TENG et al.)<br>----- | | |

The present search report has been drawn up for all claims

| Place of search | Date of completion of the search | Examiner |
| --- | --- | --- |
| BERLIN | 05-04-1984 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82